# EUROPÄISCHE PATENTANMELDUNG

(11) **EP 4 560 979 A1**
(43) Veröffentlichungstag der Anmeldung: **28.05.2025**
(21) Anmeldenummer: 23212310.9
(22) Anmeldetag: 27.11.2023
(51) Int. Cl.: H04L 9/40, H04L 12/14, H04W 28/02

(54) **ZUGRIFFSBERECHTIGUNGSENTSCHEIDUNG BASIEREND AUF EINEM LEISTUNGSFÄHIGKEITSWERT DER ZUGEHÖRIGEN DATENÜBERTRAGUNGSVERBINDUNG**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft ein Verfahren zum Bestimmen einer Entscheidung über einen Zugriff auf ein Zielsystem (R),
mit den Schritten:
- Ein Heranziehen (S3) von mindestens einem Leistungsfähigkeitswert (LW) einer dem Zugriff zugehörigen Datenübertragungsverbindung,
- ein Bewerten (S4) des mindestens einen Leistungsfähigkeitswerts (LW), wodurch ein Ergebnis bereitgestellt wird, und
- das Bestimmen (S5) der Entscheidung basierend auf dem Ergebnis.

Außerdem betrifft die Erfindung ein Computerprogrammprodukt, einen Entscheidungsknoten (PDP), ein Zielsystem (R) und ein übergeordnetes System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Bestimmen einer Entscheidung über einen Zugriff auf ein Zielsystem. Außerdem betrifft die Erfindung ein Computerprogrammprodukt, einen Entscheidungsknoten, ein Zielsystem und ein übergeordnetes System.

### Beschreibung des Stands der Technik

Angriffe auf ein Zielsystem erfolgen in der Praxis häufig nicht direkt, sondern über mehrere dazwischenliegende, vom Angreifer übernommene Rechner. Dies wird auch als "Lateral Movement" bezeichnet. Eine solche Angriffsstrategie wird häufig verwendet, um als Angreifer auf indirekten Weg Zugriff auf nach aktuellem Stand der Technik gut geschützte Zielsysteme zu erlangen.

Eine den Kontext berücksichtigende Zugriffskontrolle ist bei einer Zero Trust Security-Strategie bekannt. Dies wird auch als Context-based Access Control bezeichnet. Dadurch kann das Risiko unzulässiger Zugriffe verringert werden, da zusätzlich zur Prüfung der Berechtigung des zugreifenden Nutzers weitere Parameter wie Ort und Zeitpunkt des Zugriffs berücksichtigt werden können. Darunter ist bekannt, dass eine Entfernung als Context-Information berücksichtigt werden kann. Hinweis: Der Begriff "Context Aware Access Control" wird bei Firewalls verwendet, die bei der Filterung von TCP/UDP-Paketen eine Information des Anwendungsprotokolls berücksichtigen, d.h. eine Anpassung der Datenübertragung basierend auf dem Netzwerkkontext durchführen. Dies ist hier nicht mit Context-based Access Control gemeint.

Es sind Ansätze zum Erkennen von Lateral Movement bekannt, bei welchen Authentisierungsvorgänge AI-gestützt analysiert werden.

Es ist ein Fingerprinting bekannt, um anhand Implementierungs-spezifischer Details eines Netzwerkkommunikations-Stacks das Gerät oder das verwendete Betriebssystem zu erkennen.

IBM Security Verify Access beschreibt die unterstützten Attribute für eine Context-basierte Zugriffskontrollentscheidung. Unten der Vielzahl unterstützter Attribute ist das Attribut "ipReputation" vertreten, welches die Vertrauenswürdigkeit der vom Zugreifenden verwendeten IP-Adresse bewertet, z.B. ob die IP-Adresse zu einem bekannten Command-and-Control-Server oder zu einem anonymen Proxy gehört.

Die Aufgabe der Erfindung besteht darin, eine Lösung für eine verbesserte Zugriffskontrolle bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bestimmen einer Entscheidung über einen Zugriff auf ein Zielsystem, mit den Schritten:
- Ein Heranziehen von mindestens einem Leistungsfähigkeitswert einer dem Zugriff zugehörigen Datenübertragungsverbindung,
- ein Bewerten des mindestens einen Leistungsfähigkeitswerts, wodurch ein Ergebnis bereitgestellt wird, und
- das Bestimmen der Entscheidung basierend auf dem Ergebnis.

Die Leistungsfähigkeit der dem Zugriff zugehörigen Datenübertragungsverbindung beschreibt eine Eigenschaft des Zugriffs, insbesondere einer Zugriffsanfrage, auf das Zielsystem. Der Leistungsfähigkeitswert ist auch als Performancewert bezeichenbar.

Der dem Zugriff zugeordnete Datenübertragungsverbindung erfolgt insbesondere über ein Datenkommunikationsnetzwerk. In einem Datenkommunikationsnetzwerk, z.B. Ethernet, WLAN, IP-Netzwerk, Profinet-Netzwerk, Mobilfunk-Netzwerk erfolgt eine Übertragung von Datenpaketen einer Datenübertragungsverbindung. Dazu können Netzwerkkomponenten wie Router, Switche, Basisstationen und/oder Gateways vorgesehen sein, über die Datenpakete zum und vom Zielsystem übermittelt werden. Eine Datenübertragungsverbindung kann insbesondere bidirektional sein, es kann sich jedoch grundsätzlich auch um eine unidirektionale Datenübertragungsverbindung handeln, die in einer Variante über eine Datendiode oder ein unidirektionales Gateway erfolgt oder um eine Multicast-Datenübertragungsverbindung oder eine Broadcast-Datenübertragungsverbindung. Es kann sich dabei beispielsweise um eine TCP-Datenübertragungsverbindung, eine UDP-Datenübertragungsverbindung, eine TLS-Datenübertragungsverbindung, eine DTLS-Datenübertragungsverbindung, eine QUIC- Datenübertragungsverbindung, eine HTTP-Datenübertragungsverbindung, eine HTTPS-Datenübertragungsverbindung, eine FTP-Datenübertragungsverbindung, eine IP-Multicast-Datenübertragungsverbindung, um eine Publish-Subscribe-Datenübertragungsverbindung, eine RTP-Datenübertragungsverbindung oder um eine TSN-Datenübertragungsverbindung handeln.

Eine Nutzung von Zwischenknoten innerhalb einer Datenübertragungsverbindung beeinflusst üblicherweise den mindestens einem Leistungsfähigkeitswert. Wenn ein Angreifer über eine nicht vorgesehene (nicht erwartete) Datenübertragungsverbindung (insbesondere Kommunikationspfad) auf das Zielsystem zugreift, so führt dies automatisch zu anderen (d.h. nicht vorgesehenen, und/oder nicht erwarteten) Ausprägungen des mindestens einem Leistungsfähigkeitswerts. Dies ermöglicht, vorgesehene zulässige Zugriffe von Zugriffen eines Angreifers zu unterscheiden. Dafür wird insbesondere mindestens ein Kriterium an den mindestens einen Leistungsfähigkeitswert definiert, welches festlegt, was ein zulässiger Leistungsfähigkeitswert ist. Im Rahmen des Bewertens wird bestimmt, ob der mindestens eine Leistungsfähigkeitswert zulässig ist. Die Zulässigkeit des mindestens einen Leistungsfähigkeitswert spiegelt sich in dem Ergebnis des Bewertens wider. Durch das Ergebnis des Bewertens existiert eine Grundlage über den Zugriff zu bestimmen.

In anderen Worten wird vorgeschlagen, eine Zugriffsberechtigung (insbesondere bei einem Zugriff durch ein Gerät auf ein Zielgerät) abhängig von zumindest einem Leistungsfähigkeitswert der Datenübertragungsverbindung des Zugriffs zu gewähren bzw. zu verweigern.

Die Erfindung bietet den Vorteil, Zugriffe zu erkennen, die im Rahmen eines "lateral Movements" erfolgen. Dazu wird anhand des Kontexts (durch den mindestens einen Leistungsfähigkeitswert) eines Zugriffs erkannt, ob der Zugriff auf zulässige, plausible Weise erfolgt.

Zusammengefasst besteht ein weiterer Vorteil der Erfindung darin, dass bei einer Entscheidung über einen Zugriff auf ein Zielsystem mindestens ein Leistungsfähigkeitswert (Context-Parameter) der Datenübertragungsverbindung bewertet wird und darauf basierend über den Zugriff entschieden wird. Dadurch wird die Möglichkeit zum Missbrauch eines von einem Angreifer übernommenen Zugangscredentials verringert. Insbesondere kann dadurch ein Lateral Movement eines Angreifers über mehrere Jump Hosts erkannt, verhindert oder zumindest erschwert werden.

Wenn in einer industriellen Umgebung eine Echtzeitkommunikationsinfrastruktur als Datenübertragungsverbindung verwendet wird, so kann diese für eine Zugriffskontrollentscheidung verwendet werden. Dadurch kann ein Schutz vor entfernten Angreifern erreicht werden, die nicht die Leistungsfähigkeitswert erreichen, wie bei einer Kommunikation innerhalb der industriellen Umgebung zu erwarten wäre.

In einer Weiterbildung der Erfindung umfasst das erfindungsgemäße Verfahren den weiteren Schritt:
- Ein Empfangen der Zugriffsanfrage, wobei die Zugriffsanfrage ausgebildet ist, den Zugriff auf das Zielsystem anzufragen.

In einer weiteren Weiterbildung der Erfindung ist der mindestens eine Leistungsfähigkeitswert als mindestens ein Quality-of-Service-Wert ausgebildet.

Der Quality-of-Service-Wert (auch abgekürzt als QoS-Wert) beschreibt einen Wert des Quality-of-Services (auch abgekürzt als QoS) der Datenübertragungsverbindung. "Quality-of-Service" ist auch als "Dienstgüte" bezeichenbar. Der Wert des Quality-of-Services oder Dienstgüte wird generell daran gemessen, wie gut eine Leistungsfähigkeit einer Datenübertragungsverbindung ist und/oder welche Qualität die Datenübertragungsverbindung aufweist.

Der Leistungsfähigkeitswert bzw. QoS-Wert bezeichnet den Wert eines Leistungsfähigkeitsparameters bzw. QoS-Parameters. Der QoS-Wert ist auch bezeichnet als (QoS-)Performance-Wert und/oder QoS-Information. Der Leistungsfähigkeits- bzw. QoS-Wert ist insbesondere die durch ein Messen und/oder ein Abfragen ermittelte/erhaltene Ausprägung des Leistungsfähigkeits- bzw. QoS-Parameters, bzw. Ausprägung des Leistungsfähigkeits- bzw. QoS-Attributs.

Ein QoS-Parameter ist im Folgenden auch bezeichnet als QoS-Attribut und/oder QoS-bezogenes Attribut.

Generell bezeichnet der "Quality of Service" (QoS) oder die "Dienstgüte" die Güte eines Kommunikationsdienstes aus der Sicht der Anwender. Das heißt, wie stark die Güte des Dienstes mit deren Anforderungen übereinstimmt. Formal ist QoS eine Menge von Qualitätsanforderungen an das gemeinsame Verhalten beziehungsweise Zusammenspiel von mehreren Objekten. Die Leistungsfähigkeit einer Datenübertragungsverbindung kann insbesondere durch Datenübertragungs-Leistungsfähigkeitswerte wie Bandbreite, Durchsatz, Bitfehlerrate, Paketverlustrate, Latenzzeit, Jitter (Abweichung der Latenzzeit von ihrem Mittelwert) charakterisiert sein. Leistungsfähigkeitswerte können in einer Variante die QoS-Eigenschaften einer Echtzeitdatenübertragungsverbindung beschreiben.

Um solche allgemeinen Anwender-bezogenen Eigenschaften an die Leistungsfähigkeit einer Datenübertragungsverbindung messen zu können, werden Qualitätsparameter definiert, die diese Eigenschaften beschreiben und in Form des mindestens einen Leistungsfähigkeitswerts (und damit insbesondere des mindestens ein Quality-of-Service-Werts) der dem Zugriff zugehörigen Datenübertragungsverbindung im Sinne der vorliegenden Erfindung bewertet werden. Der Datenübertragungs-Leistungsfähigkeitswert kann insbesondere die Bandbreite, Durchsatz, Bitfehlerrate, Paketverlustrate, Latenzzeit oder Jitter oder eine Kombination einzelner, mehrerer oder aller dieser Elemente charakterisieren.

Der mindestens eine Leistungsfähigkeitsparameter und/oder der mindestens eine QoS-Parameter sind insbesondere ausgebildet als:
- Ein Qualitätsparameter eins Verbindungsaufbaus der Datenübertragungsverbindung:
   o Ein Prozentsatz der nicht zustande gekommenen Verbindungen,
   o ein Prozentsatz der Falschverbindungen, und/oder
   o ein Prozentsatz der Doppelverbindungen,
   o ein Prozentsatz von langsamen Verbindungsaufbauten, und/oder
- ein Qualitätsparameter bei bestehender Verbindung der Datenübertragungsverbindung:
   o Prozentsatz vorzeitiger Verbindungsabbrüche,
   o ein Prozentsatz nicht übertragener Nutzerdaten,
   o ein Prozentsatz fehlerhaft übertragener Nutzerdaten, o eine Verzögerung einer Nutzerdatenübertragung,
   o eine Schwankung einer Verzögerung einer Nutzerdatenübertragung,
   o eine effektive Bandbreite übertragener Nutzerdaten, o eine Signalverzögerung,
   o Schwankungen der Signalverzögerung,
   o ein Anteil von Störungen an übertragenen Signalen, und/oder
   o ein Echoanteil.

In einer weiteren Weiterbildung der Erfindung wird für das Bewerten des mindestens einen Leistungsfähigkeitswerts mindestens ein Leistungsfähigkeitskriterium herangezogen.

Nach dieser Ausführungsform wird mindestens ein Kriterium an den mindestens einen Leistungsfähigkeitswert definiert, welches festlegt, was ein zulässiger Leistungsfähigkeitswert ist. Im Rahmen des Bewertens wird bestimmt, ob der mindestens eine Leistungsfähigkeitswert zulässig ist, d.h. ob ein Zugriff auf das Zielsystem bei Vorliegen des ermittelten Leistungsfähigkeitswert zulässig ist. Der Zugriff kann dabei auf Anwendungsebene erfolgen, z.B. auf einen Web-Dienst oder auf eine Web-Applikation oder auf einen Service oder auf eine Anwendung, wogegen der Leistungsfähigkeitswert mindestens eine QoS-Eigenschaft der Datenübertragung auf Netzwerkebene charakterisiert, die bei dem auf Anwendungsebene erfolgten Zugriff verwendet wird. Zusätzlich zu Berechtigungsprüfungen des zugreifenden, authentisierten Nutzers beim Zugriff erfolgt somit eine Ermittlung und Überprüfung von Netzwerk-Performance-Parametern einer zum Zugriff verwendeten Datenübertragungsstrecke.

Ein Leistungsfähigkeitskriterium bzw. ein QoS-Kriterium bezeichnet einen zulässigen Leistungsfähigkeitswert bzw. einen zulässigen QoS-Wert bzw. einen zulässigen QoS-Wertebereich und damit Anforderung an einen Leistungsfähigkeitsparameter bzw. QoS-Parameter.

Das Leistungsfähigkeits- bzw. QoS-Kriterium kann auch als Leistungsfähigkeits- bzw. QoS-Mindestanforderung betrachtet werden und gibt insbesondere mindestens eine Schwelle, insbesondere mindestens einen Mindest- oder Maximalwert, für den Leistungsfähigkeits- bzw. QoS-Wert vor. Dadurch setzt das Leistungsfähigkeits- bzw. QoS-Kriterium an den Leistungsfähigkeits- bzw. QoS-Wert Anforderungen und damit an die Datenübertragungsverbindung bzw. and deren Leistungsfähigkeit. Ein Zugriff ist somit nur dann durch möglich, wenn der Zugriff unter Einhaltung des Leistungsfähigkeitskriteriums erfolgt.

In einer weiteren Weiterbildung der Erfindung beruht das mindestens eine Leistungsfähigkeitskriterium auf einem Regelwerk, welches Regeln jeweils für eine zulässige Ausprägung:
- des mindestens einen Leistungsfähigkeitswert und/oder
- mindestens einem ersten Leistungsfähigkeitswert im Verhältnis zu mindestens einem zweiten Leistungsfähigkeitswert, wobei der mindestens eine erste Leistungsfähigkeitswert und der mindestens eine zweite Leistungsfähigkeitswert von dem mindestens einen Leistungsfähigkeitswert aufgewiesen werden,
angibt.

Insbesondere basiert ein Leistungsfähigkeitskriterium bzw. QoS-Kriterium somit auf einem Regelwerk, welches Regeln für zulässige Ausprägungen von einzelnen Leistungsfähigkeits- bzw. QoS-Parametern und damit zulässige Leistungsfähigkeits- bzw. QoS-Werte vorgibt. Zusätzlich oder alternativ gibt das Regelwerk, Regeln für zulässige Ausprägungen von mehreren Leistungsfähigkeits- bzw. QoS-Parametern im Verhältnis zueinander an. Beispiel: Vor einen ersten QoS-Wert wird ein höherer QoS-Wert akzeptiert, falls auch ein zweiter QoS-Wert über einer vorgegebenen Grenze liegt, nicht aber wenn der zweite QoS-Wert unter der vorgegebenen Grenze liegt.

In einer weiteren Weiterbildung der Erfindung umfasst das Bestimmen der Entscheidung:
- Ein Gewähren des Zugriffs,
- ein Verweigern des Zugriffs, und/oder
- ein Gewähren des Zugriffs unter Einschränkungen.

In einer weiteren Weiterbildung der Erfindung umfasst das erfindungsgemäße Verfahren die weiteren Schritte:
- ein Empfangen des mindestens einen Leistungsfähigkeitswert,
- ein Abrufen des mindestens einen Leistungsfähigkeitswert und/oder
- ein Ermitteln des mindestens einen Leistungsfähigkeitswert.

Der mindestens eine Leistungsfähigkeitswert wird dabei vorzugsweise auf Applikationsprotokollebene der Datenübertragungsverbindung, insbesondere HTTP oder ssh ermittelt. Ebenso ist es, insbesondere bei einem 5G-Mobilfunksystem, möglich, den mindestens einen Leistungsfähigkeitswert über eine Network Exposure Function (NEF) abzufragen.

In einer weiteren Weiterbildung der Erfindung wurde der mindestens eine Leistungsfähigkeitswert bestimmt durch ein Analysieren der Datenübertragungsverbindung hinsichtlich:
- einer Datenübertragung,
- mindestens eines zugehörigen Datenpakets,
- einer Latenz,
- eines Jitters,
- eines Datendurchsatzes
- eines verwendeten Kommunikationspfads und/oder
- eines zugehörigen Zugangs-Credentials.

Insbesondere wurde der mindestens eine Leistungsfähigkeitswert im Rahmen des Ermittelns des mindestens einen Leistungsfähigkeitswert der vorherigen Ausführungsform bestimmt, alternativ wurde er von einer weiteren Einheit bestimmt.

Ein Bestimmen des mindestens einen Leistungsfähigkeitswert bzw. des QoS-Werts erfolgt nach dieser Ausführungsform implizit durch das Analysieren der auftretenden Datenübertragung (insbesondere einem Analysieren von Datenpakete, die im Rahmen der Datenübertragung ankommen).

Es ist jedoch ebenso möglich, explizit Netzwerk-Performance-Tests zur Ermittlung des Leistungsfähigkeitswerts bzw. des QoS-Werts durchführen, insbesondere durch Messung von Latenz, Jitter und/oder Datendurchsatz. Der Leistungsfähigkeitswert bzw. der QoS-Wert ist somit insbesondere ein Wert für Latenz, Jitter und/oder Datendurchsatz der Datenübertragungsverbindung.

Auch ist es möglich, dass als Leistungsfähigkeitswert bzw. QoS-Wert angegeben ist, dass als Datenübertragungsverbindung ein Echtzeitkommunikationspfad, z.B. TSN, DetNet, Profinet IRT, 5G URLLC (Ultra-reliable Low-Latency Communication) verwendet wird. Weiterhin kann bei einer TSN-Kommunikation (TSN: Time Sensitive Networking) oder bei DetNet geprüft werden, ob der Zugriff über eine Datenübertragungsverbindung, insbesondere einen Kommunikationspfad, erfolgt, die/der entsprechend der für die Zugriffsberechtigung geforderten Leistungsfähigkeits- bzw. QoS-Parameter reserviert ist.

In einer weiteren Weiterbildung der Erfindung wird der mindestens einen Leistungsfähigkeitswert aufgewiesen von:
- einem Zugangs-Credential, insbesondere:
   o einem Access Token,
   o einem JSON Web Token,
   o einem Verifiable Credential,
   o einer Verifiable Presentation und/oder
   o einem digitalen Zertifikat.

Das Zugangs-Credential dient in dieser Variante als ein Berechtigungsnachweis für den Zugriff. Es bestätigt, dass die erforderlichen Leistungsfähigkeitswert der Datenübertragung erfüllt ist.

Die Erfindung umfasst außerdem ein Computerprogrammprodukt, umfassend ein Computerprogramm (auch als Software des Policy Decision Points (PDP) bezeichnet), wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem einen Entscheidungsknoten (auch als "Policy Decision Point" (PDP) bezeichnet), aufweisend das erfindungsgemäße Computerprogrammprodukt, ausgebildet das Computerprogramm auszuführen, optional aufweisend:
- eine Empfangseinheit, ausgebildet den mindestens einen Leistungsfähigkeitswert zu empfangen.

Die Erfindung umfasst außerdem ein Zielsystem (auch als Empfänger, Zielgerät und/oder System, auf das zugegriffen wird, bezeichnet), aufweisend:
- einen Entscheidungsknoten (auch als "Policy Decision Point" (PDP) bezeichnet) nach Anspruch 11, und
- optional eine Kollektoreinheit, ausgebildet den mindestens einen Leistungsfähigkeitswert zu ermitteln und/oder zu messen (auch als "Context Attribute Collector" bezeichnet) und/oder
- optional einen Umsetzungsknoten (auch als "Policy Enforcement Point" (PEP) bezeichnet).

Das Bestimmen der Entscheidung über einen Zugriff (sowie auch die Ermittlung des mindestens einen Leistungsfähigkeitswert bzw. QoS-Werts) erfolgt insbesondere durch das Zielsystem selbst und dessen Entscheidungsknoten. Alternativ erfolgt das Bestimmen der Entscheidung über einen Zugriff durch einen dem Zielsystem zugehörigen Zwischenknoten, z.B. eine Firewall oder ein Security-Gateway.

Ebenso ist es möglich das die Kollektoreinheit und/oder der Umsetzungsknoten jeweils intern oder extern des Zielsystems angeordnet sind.

Die Erfindung umfasst außerdem ein übergeordnetes System, aufweisend:
- ein erfindungsgemäßes Zielsystem,
- ein zugreifendes System, ausgebildet auf das Zielsystem zuzugreifen, und
- ein Netzwerk, ausgebildet eine Datenübertragungsverbindung zwischen dem Zielsystem und dem zugreifenden System zu unterstützen.

Das übergeordnete System ist insbesondere ausgebildet als eine Anlage, insbesondere eine industrielle Anlage, insbesondere ein industrielles Automatisierungssystem.

Das zugreifende System ist insbesondere ausgebildet den Zugriff auf das Zielsystem zu initiieren.

Die Erfindung kann insbesondere bei einer Echtzeitkommunikation zur Übertragung von Steuerdaten angewandt werden, z.B. zur Kommunikation zwischen einer virtualisierten Automatisierungsfunktion (z.B. eine virtualisierte PLC, die auf einem Edge Computing System ausgeführt wird) als zugreifendes System und einem Remote-IO-Modul als Zielsystem, das mit Sensoren und Aktuatoren verbunden ist.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine schematische Darstellung eines erfindungsgemäßen übergeordneten Systems und
- Fig. 3: eine schematische Darstellung eines erfindungsgemäßen übergeordneten Systems ausgebildet als eine industrielle Anlage.

### DETAILLIERTE BESCHREIBUNG DER ERFINDUNG

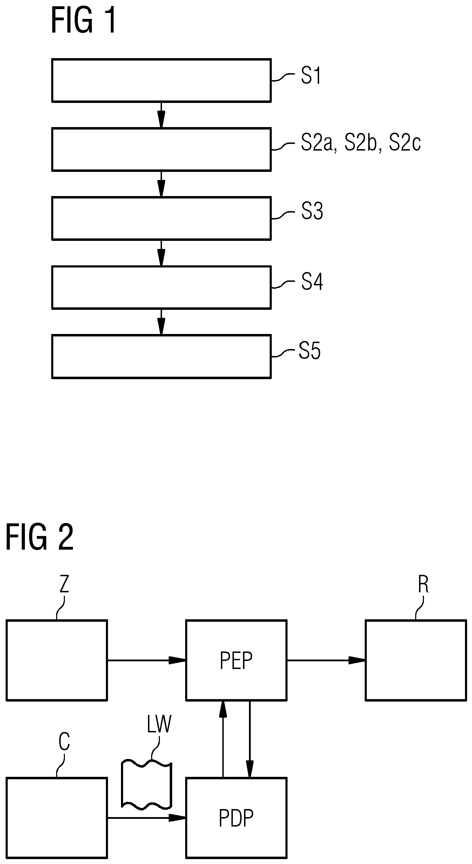

Fig. 1 zeigt ein Ablaufdiagramm des erfindungsgemäßen Verfahrens zum Bestimmen einer Entscheidung über einen Zugriff auf ein Zielsystem, mit den Schritten:
- Schritt S1: Optional, ein Empfangen der Zugriffsanfrage, wobei die Zugriffsanfrage ausgebildet ist, den Zugriff auf das Zielsystem anzufragen,
- Schritt S2a: Optional, ein Empfangen des mindestens einen Leistungsfähigkeitswert,
- Schritt S2b: Optional, ein Abrufen des mindestens einen Leistungsfähigkeitswert,
- Schritt S2c: Optional, ein Ermitteln des mindestens einen Leistungsfähigkeitswert,
- Schritt S3: Ein Heranziehen von mindestens einem Leistungsfähigkeitswert einer dem Zugriff zugehörigen Datenübertragungsverbindung,
- Schritt S4: Ein Bewerten des mindestens einen Leistungsfähigkeitswerts, wodurch ein Ergebnis bereitgestellt wird, und
- Schritt S5: Das Bestimmen der Entscheidung basierend auf dem Ergebnis.

Fig. 2 zeigt eine schematische Darstellung eines erfindungsgemäßen übergeordneten Systems, insbesondere ein schematisches Zugriffskontrollmodell. Beim Zugriff durch ein zugreifendes System Z (auch zugreifendes Gerät Z) auf ein Zielsystem R (auch eine Ressource R) wird die von einem Entscheidungsknoten PDP (auch Policy Decision Point PDP) getroffene Zugriffskontrollentscheidung von einem Umsetzungsknoten PEP (auch Policy Enforcement Point PEP) umgesetzt, d.h. ein Zugriff wird zugelassen oder abgewiesen. Der Entscheidungsknoten PDP (auch Policy Decision Point PDP) verwendet dabei neben der Information zum Zugriff selbst (zugreifendes System Z, Zielsystem R, Zugriffsart) auch eine von einer Kollektoreinheit C (auch Context Attribute Collector C) bereitgestellte Kontextinformation LW, die die Umstände des Zugriffs beschreiben.

Erfindungsgemäß wird als Kontextinformation LW mindestens ein QoS-Wert LW (= QoS-Information LW, Ausprägung LW eines QoS-Attributes; entspricht dem mindestens einen Leistungsfähigkeitswert LW) des Zugriffs des zugreifenden Systems Z auf das Zielsystem R bzw. der vom zugreifenden System Z zum Zugriff auf das Zielsystem R verwendeten Datenübertragungsverbindung, auch Kommunikationsverbindung, verwendet.

Der Context Attribute Collector C ermittelt die QoS-Werte LW zu den QoS-Parametern wie Datendurchsatz, Jitter, Latenz insbesondere durch eine Messung und/oder fragt die QoS-Werte LW über eine Network Exposure Function (NEF) des verwendeten Kommunikationsnetzes ab.

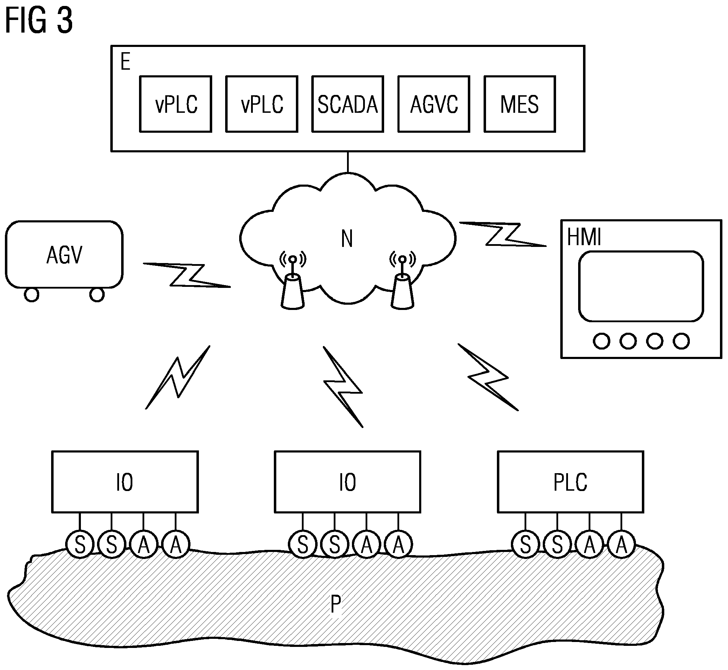

Fig. 3 zeigt eine schematische Darstellung eines erfindungsgemäßen übergeordneten Systems ausgebildet als eine industrielle Anlage, insbesondere eines industrielles Automatisierungssystems, das über Sensoren S und Aktuatoren A mit der realen, physikalischen Welt P interagiert.

Für die Steuerung und Überwachung von Remote-Input/Output-Baugruppen IO sind neben einer gegenständlichen speicherprogrammierbaren Steuerung durch "Programmable Logic Controller" PLC außerdem virtualisierte "Programmable Logic Controller" vPLC (virtual PLC) vorgesehen. Ein virtualisierter "Programmable Logic Controller" vPLC liegt insbesondere in Form eines Linux-Containers, einer virtuellen Maschine oder eines nativen Programms vor, welche auf einer Edge-Computing-Compute-Plattform ausgeführt werden.

Weiterhin sind ein Bedien-Panel HMI, auch als "Human-Machine-Interface bezeichenbar, vorgesehen, welches Prozessdaten einer virtualisierten "Supervisory control and data acquisition"-Komponente SCADA anzeigt, oder über welches ein Bediener (Benutzer) auf den technischen Prozess einwirken kann. Weiterhin ist ein führerloses Transportsystem-Fahrzeug AGV, auch als "automated guided vehicle" bezeichenbar, dargestellt, das von einem Controller AGVC gesteuert wird.

Auch ist ein Produktionsplanungssystem MES, auch als "manufacturing execution system" bezeichenbar, zur Planung und Durchführung von Produktionsaufgaben vorgesehen.

Die Übertragung von Überwachungs- und Steuerungsdaten erfolgt unter Nutzung eines drahtlosen Steuernetzwerks N, auch als "wireless control network" N bezeichenbar, z.B. einem 5G-SNPN-Netzwerk oder einem industriellen WLAN-Infrastruktur. Es kann jedoch ebenso ein leitungsgebundenes Steuernetzwerk N verwendet werden, z.B. ein reguläres Ethernet-Netzwerk oder ein "Time Sensitive Networking" (TSN) unterstützendes Ethernet-Kommunikationsnetzwerk N.

Die auf der Edge Compute Plattform E ausgeführten Funktionen vPLC, SCADA, MES, AGVC können allgemein auch als virtualisierte Automatisierungsfunktionen (VAF) bezeichnet werden, die jeweils z.B. Form eines Linux-Containers, einer virtuellen Maschine, eines nativen Programms, eines Skript-basierten Programms (z.B. JavaScript, Python) oder als Bytecode vorliegen. Der Edge Compute Node E kann z.B. ein IPC, ein Server-Cluster, eine Hyper-Converged Infrastrucutre, eine Edge Cloud oder eine mit einem 5G-Mobilfunknetz integrierte Edge-Funktionalität sein, z.B. Multi-Access Edge Computing (MEC).

Die einzelnen Komponenten, z.B. ein virtualisierter Programmable Logic Controller" vPLC und eine Remote-Input/Output-Baugruppe IO, kommunizieren über das Steuernetzwerks N und übertragen dabei Steuerkommandos, z.B. zum Einrichten einer Gerätekonfiguration, zum Einrichten von Security-Credentials oder zum Einwirken auf einen Aktuator A. Ein solcher Zugriff ist nur möglich, wenn der Zugreifende authentisiert ist und als berechtigt erkannt wird. Dazu umfassten die Komponenten der Remote-Input/Output-Baugruppe IO (Remote-Input/Output-Baugruppe IO selbst oder alternativ ein der Remote-Input/Output-Baugruppe IO zugehöriger Zwischenknoten, z.B. eine Firewall oder ein Security-Gateway) einen Policy Decision Point und einen Policy Enforcement Point.

Erfindungsgemäß ist der Zugriff, z.B. durch einen virtualisierten "Programmable Logic Controller" vPLC auf eine Remote-Input/Output-Baugruppe IO, nur dann zulässig und damit möglich, wenn der Zugriff bzw. die für den Zugriff verwendete Kommunikationsverbindung und die für die verwendete Kommunikationsverbindung ermittelten QoS-Werte die vorgegebenen QoS-Mindestanforderungen (=QoS-Kriterien), z.B. an Latenz oder Jitter, erfüllt. Dadurch wird die Missbrauchsmöglichkeit verringert. Die Remote-Input/Output-Baugruppe IO umfasst dazu einen Context Attribute Collector (siehe Fig. 2), der die QoS-Information (siehe Fig. 2) ermittelt und dem Policy Decision Point (siehe Fig. 2) der Remote-Input/Output-Baugruppe IO bereitstellt, sodass die Zugriffskontrollentscheidung auch die dem Zugriff zugeordnete QoS-Information berücksichtigen kann.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bestimmen einer Entscheidung über einen Zugriff auf ein Zielsystem (R),
mit den Schritten:
- Ein Heranziehen (S3) von mindestens einem Leistungsfähigkeitswert (LW) einer dem Zugriff zugehörigen Datenübertragungsverbindung,
- ein Bewerten (S4) des mindestens einen Leistungsfähigkeitswerts (LW), wodurch ein Ergebnis bereitgestellt wird, und
- das Bestimmen (S5) der Entscheidung basierend auf dem Ergebnis.

2. Verfahren nach Anspruch 1,
mit dem weiteren Schritt:
- Ein Empfangen (S1) der Zugriffsanfrage, wobei die Zugriffsanfrage ausgebildet ist, den Zugriff auf das Zielsystem (R) anzufragen.

3. Verfahren nach einem der vorhergehenden Ansprüche,
wobei der mindestens eine Leistungsfähigkeitswert (LW) als mindestens ein Quality-of-Service-Wert ausgebildet ist.

4. Verfahren nach einem der vorhergehenden Ansprüche,
wobei für das Bewerten des mindestens einen Leistungsfähigkeitswerts (LW) mindestens ein Leistungsfähigkeitskriterium herangezogen wird.

5. Verfahren nach Anspruch 4,
wobei das mindestens eine Leistungsfähigkeitskriterium auf einem Regelwerk beruht, welches Regeln jeweils für eine zulässige Ausprägung:
- des mindestens einen Leistungsfähigkeitswert (LW) und/oder
- mindestens einem ersten Leistungsfähigkeitswert im Verhältnis zu mindestens einem zweiten Leistungsfähigkeitswert, wobei der mindestens eine erste Leistungsfähigkeitswert und der mindestens eine zweite Leistungsfähigkeitswert von dem mindestens einen Leistungsfähigkeitswert (LW) aufgewiesen werden,
angibt.

6. Verfahren nach einem der vorhergehenden Ansprüche,
wobei das Bestimmen der Entscheidung umfasst:
- Ein Gewähren des Zugriffs,
- ein Verweigern des Zugriffs, und/oder
- ein Gewähren des Zugriffs unter Einschränkungen.

7. Verfahren nach einem der vorhergehenden Ansprüche,
mit den weiteren Schritten:
- ein Empfangen (S2a) des mindestens einen Leistungsfähigkeitswert (LW),
- ein Abrufen (S2b) des mindestens einen Leistungsfähigkeitswert (LW) und/oder
- ein Ermitteln (S2c) des mindestens einen Leistungsfähigkeitswert (LW).

8. Verfahren nach einem der vorhergehenden Ansprüche,
wobei der mindestens eine Leistungsfähigkeitswert (LW) bestimmt wurde, durch ein Analysieren der Datenübertragungsverbindung hinsichtlich:
- einer Datenübertragung,
- mindestens eines zugehörigen Datenpakets,
- einer Latenz,
- eines Jitters,
- eines Datendurchsatzes
- eines verwendeten Kommunikationspfads und/oder
- eines zugehörigen Zugangs-Credentials.

9. Verfahren nach einem der vorhergehenden Ansprüche,
wobei der mindestens einen Leistungsfähigkeitswert (LW) aufgewiesen wird von:
- einem Zugangs-Credential, insbesondere:
o einem Access Token,
o einem JSON Web Token,
o einem Verifiable Credential,
o einer Verifiable Presentation und/oder
o einem digitalen Zertifikat.

10. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit ausgeführt wird.

11. Entscheidungsknoten (PDP),
aufweisend das Computerprogrammprodukt nach Anspruch 10, ausgebildet das Computerprogramm auszuführen,
optional aufweisend:
- eine Empfangseinheit, ausgebildet den mindestens einen Leistungsfähigkeitswert (LW) zu empfangen.

12. Zielsystem (R), aufweisend:
- einen Entscheidungsknoten (PDP) nach Anspruch 11, und
- optional eine Kollektoreinheit (C), ausgebildet den mindestens einen Leistungsfähigkeitswert (LW) zu ermitteln und/oder zu messen und/oder
- optional einen Umsetzungsknoten (PEP).

13. Übergeordnetes System, aufweisend:
- ein Zielsystem (R) nach Anspruch 12,
- ein zugreifendes System (Z), ausgebildet auf das Zielsystem (R) zuzugreifen, und
- ein Netzwerk (N), ausgebildet eine Datenübertragungsverbindung zwischen dem Zielsystem (R) und dem zugreifenden System (Z) zu unterstützen.
